# EUROPEAN PATENT APPLICATION

(11) **EP 3 852 049 A1**
(43) Date of publication of application: **21.07.2021**
(21) Application number: 19859232.1
(22) Date of filing: 01.07.2019
(51) Int. Cl.: G06Q 50/28

(54) **INTELLIGENT INTEGRATED INTERNATIONAL FREIGHT SERVICE PLATFORM**

(30) Priority: 11.09.2018 CN 201811058193
(71) Applicant: Shanghai Myokon Network Technology Co., Ltd., Shanghai 200336 (CN)
(72) Inventor: WANG, Jinkun, Shanghai 200336 (CN)
(74) Representative: Murgitroyd & Company
(86) International application number: PCT/CN2019/094273
(87) International publication number: WO 2020/052325

(57) **Abstract**

Disclosed is an intelligent integrated international freight service platform, comprising an order information management module, a booking information management module, a logistics information management module, a customs declaration and inspection module, an insurance information module, a bill of lading information module, an arrival and departure information module, a document management module and a process monitoring module. According to the progress of order process, a progress prompt tag is marked on the order process monitoring strip and the operation can be executed. The order information management module, the booking information management module, the logistics information management module, the customs declaration and inspection module, the insurance information module, the bill of lading information module, the departure information module and the document management module are arranged to form the progress of order process. The present invention integrates all the information related to business operation, logistics, declaration for inspection, customs, insurance, ships and the like into an integrated service system, can be used for screening and selection by a user, and can intelligently and automatically screen, match and execute the operation of the business process according to the order information of a user.

## Description

The application claims priority to Chinese patent application No. CN201811058193.0, entitled "INTELLIGENT INTEGRATED INTERNATIONAL FREIGHT SERVICE PLATFORM," filed with China National Intellectual Property Administration on Sep. 11, 2018 and incorporated herein by reference in its entirety.

### TECHNICAL FIELD

The present invention relates to the technical field of international freight, and more particularly, relates to an intelligent integrated international freight service platform.

### BACKGROUND

At present, the operation of the international freight service is still very traditional. The traditional operation, in most cases, includes filling in the forms offline and then checking them by specially assigned persons. The international freight transaction process is complex and involves huge amounts of money. The traditional way relies more on people's own responsibility and can easily result in wrong information, missing information, making mistakes, and the like. In addition, the traditional way requires coordination across various industries of logistics, shipping, customs, insurance, etc. At present, some of the companies in the above-mentioned various industries are developing in a trend of networking and providing services such as information query and display. However, these services, with modularized functions and operations, are only parts of the whole operation process and there is no intelligent integrated platform that can integrate all aspects together. Therefore, there is a need for an integrated internet platform, instead of a single module, that can display and make interaction during the entire process, integrate the aforementioned various services, and can be applied to the entire business chain as well as achieve an overall intelligent operation; and the integrated internet platform is intended for achieving intelligent operations through computer's self-processing.

### SUMMARY OF THE INVENTION

The purpose of the present invention is to provide an intelligent integrated international freight service platform to solve the problem of inconvenience in existing information interaction.

In order to achieve the above purpose, the technical solution of the present invention is:
an intelligent integrated international freight service platform, comprises the following modules:
an order information management module, used to initiate an order, obtain and store order information, and add an order process sequence with a unique number to the order information;
a booking information management module, used to connect to and exchange information with a server of a shipping company, obtain and display booking information;
a logistics information management module, used to connect to and exchange information with a server of a logistics company, obtain and display logistics information;
a customs declaration and inspection module, used to connect to and exchange information with a server of a customs declaration company, obtain and display customs declaration information;
an insurance information module, used to connect to and exchange information with a server of an insurance company, obtain and display insurance information;
a bill of lading information module, used to connect to and exchange information with a server of a carrier, obtain and display carrier information;
an arrival and departure information module, used to display current logistics location, delays and expected arrival information;
a document management module, used to generate expense documents;
a process monitoring module, used to mark a progress prompt tag on an order process monitoring strip and execute an operation according to the progress of order process, and an order information management module, an booking information management module, an logistics information management module, an customs declaration and inspection module, an insurance information module, a bill of lading information module, an arrival and departure information module, and a document management module being arranged to form the progress of order process.

In further embodiment, the order process monitoring strip adds a progress monitoring item according to the progress of order process, and the progress prompt tag is added to each of the process monitoring items according to individual progress of process.

In further embodiment, the arrival and departure information module comprises an electronic map module for displaying a world electronic map, and adding a location mark to the world electronic map according to ship positioning information.

In further embodiment, the location mark comprises current location mark, arrival location mark, and emergency event mark, and the current location mark is a dynamic location mark added to the world electronic map according to the ship positioning information, and the arrival location mark is a static location mark added according to ship destination location, and the emergency event mark is a static location mark added according to the collected special events of a ship.

In further embodiment, the location mark is a mark trigger point, and the mark trigger point can be triggered to display relevant location information.

In further embodiment, the order information comprises order number, consignor, consignee, contact person, port of loading, port of discharge, estimated time of delivery, place of receipt, and container information.

In further embodiment, the booking information comprises port of departure, port of destination, shipping company, voyage, vessel name, container type, price, cut-off date, closing date, estimated time of delivery, and sailing date.

In further embodiment, the logistics information includes logistics company, location of the company, vehicle model and tonnage, price, time period, and company search function.

In further embodiment, the bill of lading information comprises consignor, consignee, contact person, carrier, place of receipt, vessel name, voyage, port of loading, port of discharge, place of delivery, mark, packaging type, packaging quantity, description of goods, gross weight, and volume.

In further embodiment, the expense documents comprise booking fees, trailer fees, customs declaration fees, inspection fees, insurance fees, and courier fees.

The present invention has the following advantages:
The present invention is designed according to the transaction process of international freight, which integrates all the information in various industries such as business operation, logistics, declaration for inspection, customs, insurance, ships and the like into an integrated service system, and can be used for screening and selection by a user, and can intelligently and automatically screen, match and execute the operation of the business process according to the basic contents of the order information filled in by a user. The present invention improves the convenience in user operation, simplifies the series of processes,, and save labor cost to some extent, making the whole business process more simple, efficient, convenient and cost less. An intelligent integrated international freight service platform is provided with a visual and operable dynamic operation system to realize convenient one-key operation from ordering to the end of the whole process.

### BRIEF DESCRIPTION OF THE DRAWINGS

In order to illustrate the embodiments of the present invention or the technical solutions in the prior art more clearly, a brief description of the accompanying drawings that are used in the description of the embodiments or the prior art is given below. Apparently, the accompanying drawings in the description below are merely the embodiments of the present invention, based on which other drawings may be obtained by those skilled in the art without any creative work.
FIG.1 is a system structure diagram of the intelligent integrated international freight service platform according to an embodiment of the present invention.
FIG.2 is a content display diagram of the process monitoring module in Figure 1.

In the figures:
1. Order information management module; 2. Booking information management module; 3. Logistics information management module; 4. Customs declaration and inspection module; 5. Insurance information module; 6. Bill of lading information module; 7. Arrival and departure information module; 8. Document management module; 9. Process monitoring module; 10. Order process monitoring strip; 11. Progress prompt tag.

### DETAILED DESCRIPTION OF THE EMBODIMENTS

In order to make the purpose, technical solutions, and advantages of the embodiments of the present invention more clear, the technical solutions in the embodiments of the present invention will be described clearly and completely as follows in combination with accompanying drawings in the embodiments of the present invention. Apparently, the embodiments described below are merely a part, but not all, of the embodiments of the present invention. The components of the embodiments of the present invention generally described and illustrated in the accompanying drawings herein may be arranged and designed in various different configurations. Therefore, the following detailed description of the embodiments of the present invention provided in the accompanying drawings is not intended to limit the scope of the claimed invention, but merely represents selected embodiments of the present invention. All of other embodiments, obtained by those skilled in the art based on the embodiments of the present invention without any creative work, fall into the protection scope of the present invention.

The embodiments of the present invention will be described in detail below. Examples of the embodiments are shown in the accompanying drawings, in which the same or similar reference numbers indicate the same or similar elements or elements with the same or similar functions throughout the description. The embodiments described below with reference to the accompanying drawings are exemplary, and are intended to explain the present invention, and should not be understood as limiting the present invention.

The present invention will be further described below with reference to the accompanying drawings and specific embodiments.

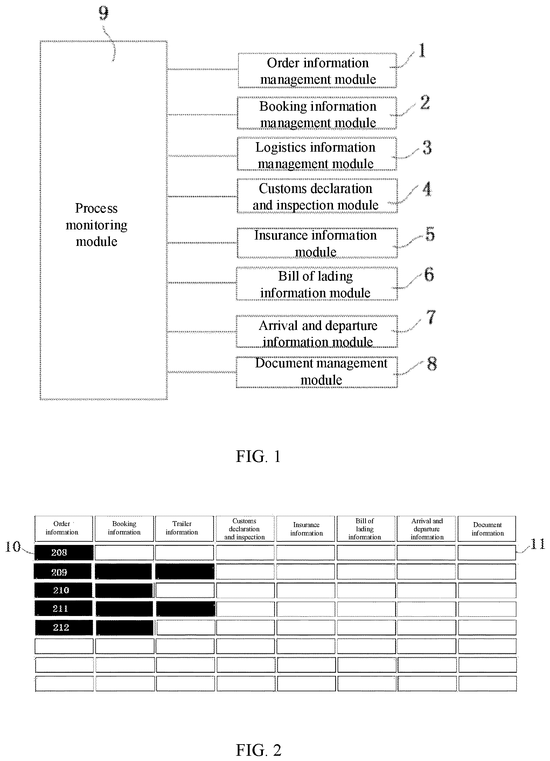

As shown in Figs. 1-2, an intelligent integrated international freight service platform includes the following modules according to an embodiment of the present invention:

An order information management module 1, is used to initiate an order, obtain and store order information, and add an order process sequence with a unique number to the order information. The unique number of the order process sequence is used to distinguish the order process sequences. The order information includes order number, consignor, consignee, contact person, port of loading, port of discharge, estimated time of delivery, place of receipt, and container information. A user can enter the above information via a smart terminal device connected to the Internet to make a registration and then generate order information. The order information module collects most of the basic information needed, and the following modules can be automatically searched and matched by the computer so that the previous modules can be associated with the following modules. The order information module is not only to record, track and keep a record of the data of the following modules, but also to be operated as the first step, and based on the information that the order information module provided, the following operations can be automatically matched and searched.

The booking information management module 2, is used to connect to and exchange information with a server of a shipping company, obtain and display booking information. The booking information includes port of departure, port of destination, shipping company, voyage, vessel name, container type, price, shipping instruction (SI) cut-off date, container yard (CY) closing date, estimated time of delivery, and sailing date. The server of the shipping company publishes the booking information including the above content. A user selects the booking information via a smart terminal device connected to the Internet, and then adds the booking information to the order process sequence.

The logistics information management module 3, is used to connect to and exchange information with a server of a logistics company, obtain and display logistics information. The logistics information includes logistics company, location of a company, vehicle model and tonnage, price, time period, and company search function. The server of the logistics company publishes the logistics information including the above content, and a user selects the logistics information via a smart terminal device connected to the Internet, and then adds the logistics information to the order process sequence.

The customs declaration and inspection module 4, is used to connect to and exchange information with a server of a customs declaration company, obtain and display customs declaration information. The customs declaration information includes customs declaration company, service price, and company search function. The server of the customs declaration company publishes the declaration information including the above content, and a user selects the declaration information via a smart terminal device connected to the Internet, and then adds the declaration information to the order process sequence.

The insurance information module 5, is used to connect to and exchange information with a server of an insurance company, obtain and display insurance information. The insurance company includes information such as insurance company, insurance type, insurance contract, and insured amount. The server of the insurance company publishes insurance information including the above content. A user selects the insurance information via a smart terminal device connected to the Internet, and then adds the insurance information to the order process sequence.

The bill of lading information module 6, is used to connect to and exchange information with a server of a carrier, obtain and display carrier information. The bill of lading information includes consignor, consignee, contact person, carrier, place of receipt, vessel name, voyage, port of loading, port of discharge, place of delivery, mark, packaging type, packaging quantity, description of goods, gross weight, and volume. The bill of lading information module 6 collects the content included in order information, booking information, and logistics information to automatically generate bill of lading information, and sends the bill of lading information to the server of the carrier, and the operator of the carrier deals with the bill of lading information on the server of the carrier.

The arrival and departure information module 7, is used to display current logistics location, delays and expected arrival information. Information such as shipping company, vessel name, voyage, and expected departure time can be added for convenience. The arrival and departure information module 7 includes an electronic map module for displaying a world electronic map, and adding a location mark to the world electronic map according to ship positioning information. Nowadays, the ships are equipped with GPS positioning function or Beidou positioning function, and the arrival and departure information module 7 regularly collects the ship positioning information from the server of the shipping company, and adds the location mark to the world electronic map according to the positioning information.

The location mark includes current location mark, arrival location mark, and emergency event mark. The current location mark is a dynamic location mark added to the world electronic map according to the ship positioning information; the arrival location mark is a static location mark added according to the ship destination location; the emergency event mark is a static location mark added according to collected special events of the ship.

The location mark is a mark trigger point, and the mark trigger point can be triggered to display relevant location information. When a user clicks the mark trigger point on the world electronic map, the arrival and departure information module 7 will directly display relevant information of the location mark on the world electronic map for the user to understand the relevant content of the location mark efficiently and intuitively.

The document management module 8, is used to generate expense documents; the expense documents include booking fees, trailer fees, customs declaration fees, inspection fees, insurance fees, courier fees and other fees. Traditionally and generally, a bill of lading needs to be sent by post, or an electronic version of a bill of lading needs to be sent by e-mail. The bill of lading information module of the present invention will generate a list of expenses. After a user makes the payment, the online interaction and delivery work on the bill of lading document will be automatically performed. A bill of lading is a document of title for the goods. The bill of lading information module is mainly used for confirming bill of lading information, and the current step is mainly related to payment and obtaining the bill of lading.

The process monitoring module 9, is used to mark a progress prompt tag 11 on an order process monitoring strip 10 and execute an operation according to the progress of order process. The progress of order process is arranged and composed by the order information management module 1, the booking information management module 2, the logistics information management module 3, the customs declaration and inspection module 4, the insurance information module 5, the bill of lading information module 6, the arrival and departure information module 7, and the document management module 8. The progress of order process can be any combination of the above modules. According to current international shipping transaction process, one preferred embodiment includes the combination of the modules in the order of the order information management module 1, the booking information management module 2, the logistics information management module 3, the customs declaration and inspection module 4, the insurance information module 5, the bill of lading information module 6, the arrival and departure information module 7, and the document management module 8. A user can click an order process monitoring strip to open corresponding progress of an order process, and execute an operation on the corresponding management module, which simplifies the operation process.

The order process monitoring strip 10 includes an order process monitoring strip 10 and a progress prompt tag 11. The order process monitoring strip 10 adds a process monitoring item according to progress of order process. In the embodiment, the process monitoring item includes order generation item, booking generation item, trailer generation item, customs declaration generation item, insurance generation item, bill of lading generation item, arrival generation item, and document generation item. The progress prompt tag 11 is added to each process monitoring item according to individual progress of process, so that users can intuitively understand the progress of their own order. Progress of order is collected and integrated together to facilitate progress monitoring and tracking.

In specific use, after a user enters and saves order information in the order information management module 1, the order generation item of the order process monitoring strip 10 adds a progress prompt tag 11; after a user enters and saves booking information in the booking information management module 2, the booking generation item of the order process monitoring strip 10 adds a progress prompt tag 11; after a user enters and saves logistics information in the logistics information management module 3, the logistics generation item of the order process monitoring strip 10 adds a progress prompt tag 11; after a user enters and saves declaration information in the customs declaration information management module, the declaration generation item of the order process monitoring strip 10 adds a progress prompt tag 11; after a user enters and saves insurance information in the insurance information management module, the insurance generation item of the process monitoring strip 10 adds a progress prompt tag 11; after the bill of lading information module 6 generates bill of lading information, the bill of lading generation item of the order process monitoring strip 10 adds a progress prompt tag 11; after a carrier deals with the bill of lading information, the arrival generation item of the order process monitoring strip 10 adds a progress prompt tag 11; when a document is generated after ship's arrival and payment, the document generation item of the order process monitoring strip 10 adds a progress prompt tag 11.

Finally, it should be noted that the above-mentioned respective embodiments are only used for illustrating, rather than limiting, the technical solutions of the present invention; although the present invention has been described in detail with reference to the above-mentioned embodiments, those skilled in the art should appreciate that, modifications still may be made to the technical solutions disclosed by the above-mentioned embodiments, or equivalent substitutions may be made to a part or all of the technical features therein; and these modifications or substitutions do not make the spirit of the corresponding technical solutions depart from the scope of the technical solutions of the respective embodiments of the present invention.

## Claims

1. An intelligent integrated international freight service platform, **characterized in that**, the platform comprises the following modules:
an order information management module, used to initiate an order, obtain and store order information, and add an order process sequence with a unique number to the order information;
a booking information management module, used to connect to and exchange information with a server of a booking company, obtain and display booking information, and provide online booking operation function;
a logistics information management module, used to connect to and exchange information with a server of a logistics company, obtain and display logistics information, and provide online operation function for booking a car;
a customs declaration and inspection module, used to connect to and exchange information with a server of a customs declaration company, obtain and display customs declaration information, and provide online operation function for customs declaration;
an insurance information module, used to connect to and exchange information with a server of an insurance company, obtain and display insurance information, and provide online insurance operation function;
a bill of lading information module, used to connect to and exchange information with a server of a carrier, obtain and display carrier information, and provide online confirmation function for bill of lading information;
an arrival and departure information module, used to display current logistics location, arrival and departure information, delays, and expected and actual arrival information;
a document management module, used to generate bill of lading documents and provide online delivery and online fees payment function for bill of lading documents;
a process monitoring module, used to mark a progress prompt tag on an order process monitoring strip according to progress of order process, and execute an operation on corresponding progress of order process according to the order process monitoring strip, and the progress of order process being arranged and composed by an order information management module, an booking information management module, an logistics information management module, an customs declaration and inspection module, an insurance information module, a bill of lading information module, an arrival and departure information module, and a document management module.

2. The intelligent integrated international freight service platform according to claim 1, **characterized in that**, the order process monitoring strip adds a progress monitoring item according to progress of order process, and the progress prompt tag is added to each of the process monitoring items according to individual progress of process.

3. The intelligent integrated international freight service platform according to claim 1, **characterized in that**, the arrival and departure information module comprises an electronic map module for displaying a world electronic map, and adding a location mark to the world electronic map according to ship positioning information.

4. The intelligent integrated international freight service platform according to claim 3, **characterized in that**, the location mark comprises current location mark, arrival location mark, and emergency event mark, and the current location mark is a dynamic location mark added to the world electronic map according to the ship positioning information; and the arrival location mark is a static location mark added according to ship destination location; and the emergency event mark is a static location mark added according to collected special events of a ship.

5. The intelligent integrated international freight service platform according to claim 3, **characterized in that**, the location mark is a mark trigger point, and the mark trigger point can be triggered to display relevant location information.

6. The intelligent integrated international freight service platform according to claim 1, **characterized in that**, the order information comprises order number, consignor, consignee, contact person, port of loading, port of discharge, estimated time of delivery, place of receipt, and container information.

7. The intelligent integrated international freight service platform according to claim 1, **characterized in that**, the booking information comprises port of departure, port of destination, shipping company, voyage, vessel name, container type, price, cut-off date, closing date, estimated time of delivery, and sailing date.

8. The intelligent integrated international freight service platform according to claim 1, **characterized in that**, the logistics information includes logistics company, location of a company, vehicle model and tonnage, price, time period, and company search function.

9. The intelligent integrated international freight service platform according to claim 1, **characterized in that**, the bill of lading information comprises consignor, consignee, contact person, carrier, place of receipt, vessel name, voyage, port of loading, port of discharge, place of delivery, mark, packaging type, packaging quantity, description of goods, gross weight, and volume.

10. The intelligent integrated international freight service platform according to claim 1, **characterized in that**, the expense documents comprise booking fees, trailer fees, customs declaration fees, inspection fees, insurance fees, courier fees.
